# EUROPEAN PATENT APPLICATION

(11) **EP 1 870 004 A2**
(43) Date of publication of application: **26.12.2007**
(21) Application number: 07110312.1
(22) Date of filing: 14.06.2007
(51) Int. Cl.: A47J 31/44

(54) **Presser device for coffee powder and the like**

(30) Priority: 19.06.2006 IT VE20060040
(71) Applicant: Fregnan Florindo, 31030 Dosson (IT)
(72) Inventor: Fregnan Florindo, 31030 Dosson (IT)
(74) Representative: Piovesana, Paolo

(57) **Abstract**

A presser device for coffee powders and the like to be applied to a coffee grinder with its dispenser (4) provided with a front exit for the coffee powder and also provided with a fork-shaped support for a filter holder (10) with filter cup (14), characterised by comprising:
- a member (6) for its connection to the coffee grinder,
- a presser (26) with an upper handgrip (28), with a lower disc portion (30) for pressing and with a vertical shaft (32) for connecting said handgrip (28) to said disc portion (30),
- a tubular element (24) for slidably supporting said presser along said shaft (32),
- elastic means associated with said tubular element to maintain said presser in its upper end-of-travel position when external forces are absent,
- at least one hinged arm (22) for connecting said connection member (6) to said tubular support element (24), said arm guiding the movement of said support between an active position in which the axis of said presser (26) substantially coincides with the axis of said filter cup positioned with the filter holder on said fork-shaped support, and a rest position in which said presser is external to the space overlying said filter cup, and
- means for halting the angular travel of said arm in said active and rest positions.

## Description

The present invention relates to a presser device for coffee powder and the like.

In preparing the coffee infusion known as "expresso", a flow of steam is passed through a measured quantity of coffee contained in a suitable filter cup. In passing through the coffee powder the water condenses and extracts aromas from the powder to form the drink known as expresso coffee.

With the usual equipment for preparing expresso coffee, the coffee powder through which the water is to pass is firstly pressed to attain the required degree of compactness, in order to slow down the passage of the water stream to an extent suitable to enable correct extraction of the coffee aromas.

The coffee powder previously poured into the filter cup is currently pressed differently depending on the manner in which the coffee powder is delivered into the coffee machine.

The coffee powder dispensers usually used in bars form part of the coffee grinder and have their coffee exit at the bottom.

In the case of dispensers with a bottom exit for the coffee powder, this falls into an underlying filter cup resting with its filter holder on a fork-shaped support. To enable the coffee to be pressed the filter holder must be moved along the fork-shaped support to leave the space overlying the filter cup free and enable the operator to press the coffee powder with a suitable presser applied to the dispenser or with a tool separate from the coffee grinder (manual presser) and resting on the bar surface when not in use.

Coffee pressing is a slow and uncomfortable operation requiring a certain care by the operator, both to prevent the coffee powder escaping from the filter cup and to position the presser within it.

In the case of dispensers of the current generation (without a traditional mechanical measurer) with front exit, the coffee powder descends along an inclined chute provided in the front part of the dispenser and falls, as in the previous case, into the underlying filter cup, supported by a filter holder resting on a fork-shaped support applied to the dispenser. A presser is fixed thereto, to the side of the delivery chute. In this case, after the coffee powder has fallen into the filter cup, the operator transfers this together with the filter holder into a position below the fixed presser and forces it upwards to press the coffee powder contained in it.

Again in this case the coffee pressing operation is slow, uncomfortable and inaccurate, involving transfer of the filter holder together with the coffee to be pressed from one position to another, and requires from the operator a force directed upwards if the presser is fixed, or downwards if the presser is a piston fixed on the front of the dispenser, and requiring a coffee machine of more complex and hence unnatural construction.

To eliminate this latter drawback, it has already been proposed to replace the fixed presser by a presser mounted slidable in a vertical tubular support, with which a spring is associated to elastically maintain the presser in a position raised from an underlying fork-shaped support. To press the coffee powder the filter holder has to be transferred from the opposition below the delivery hole to the position below the presser and then a downward force is applied to this latter to press the coffee powder. In this case the force applied by the operator has been rendered more natural, however the other drawbacks have not been eliminated and moreover the construction of the coffee grinder has been made more complicated.

Moreover both types of dispenser with a front coffee powder exit present the further drawback of restricting the position of the presser relative to the coffee powder delivery chute, this being a restriction which is difficult to reconcile with the position of the coffee machine relative to the coffee grinder, this position depending on operator requirements and on the space available on the bar counter.

An object of the invention is to eliminate the aforesaid drawbacks by providing a presser device for coffee powder and the like, which does not require the filter holder, containing the filter cup with the coffee powder to be pressed, to be moved from the dispenser before pressing.

Another object of the invention is to provide a presser device which ensures maximum operative precision without requiring particular attention by the personnel concerned.

Another object of the invention is to provide a presser device which can be applied to the coffee dispenser to suit the position of the coffee machine relative to it.

These and further objects which will be apparent from the ensuing description are attained, according to the invention, by a presser device for coffee powders and the like, as describe in claim 1.

A preferred embodiment of the present invention is described in detail hereinafter, with reference to the accompanying drawings, in which:
- Figure 1: is an overall perspective view of the base of a coffee grinder with the fitted device of the invention in its rest condition,
- Figure 2: shows it in the same view, but in its active condition,
- Figure 3: is a plan view from above showing the device of the invention in its rest condition,
- Figure 4: shows it in the same view as Figure 3, but in its active condition, and
- Figure 5: shows it in the same view and in the same condition as Figure 4, but with the presser support arm differently applied to the element for its connection to the coffee grinder.

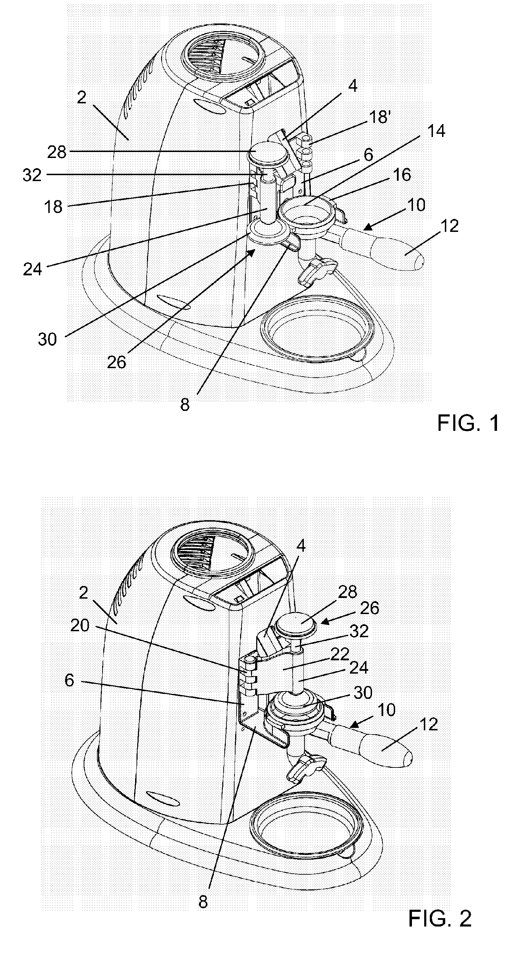

As can be seen from the drawings, the device of the invention is applicable to a traditional coffee grinder, which in Figures 1 and 2 is shown for simplicity by the base 2 alone, from which an inclined chute 4 emerges frontward for delivering the coffee powder.

The device of the invention comprises an element for its connection to the base 2 of the coffee grinder. It comprises a substantially U-shaped plate 6, with the two arms disposed on one and the other side of the chute 4 and provided with holes for its fixing to said base.

The plate 6 is provided lowerly with a pair of forwardly facing arms 8 forming a support fork for a traditional filter holder 10, comprising a handgrip 12 and a seat for housing a filter cup 14.

The two arms 8 are dimensioned such that when the filter holder 10 is completely inserted in the fork-shaped support 6 and is supported thereby via its traditional projections 16 on the system for its bayonet connection to the coffee machine, the filter cup 14 is situated in the correct position below the delivery chute 4 to receive the coffee powder.

Along the two opposing vertical sides of the plate 6 there are provided two hinge elements 18, 18', to each of which there can be optionally applied a corresponding hinge element 20 provided at one end of an arm 22, which in this manner can rotate relative to the plate 6 about a vertical axis.

The other end of the arm 22 is shaped as a tubular support 24 for a presser, indicated overall by 26. It comprises an upper handgrip 28, a lower disc element 30 and a shaft 32 connecting these two together.

The shaft 32 is slidably housed within the tubular support 24, between them there being interposed a spring (not shown in the drawings) for maintaining the presser in its upper end-of-travel position.

The device of the invention operates in the following manner.

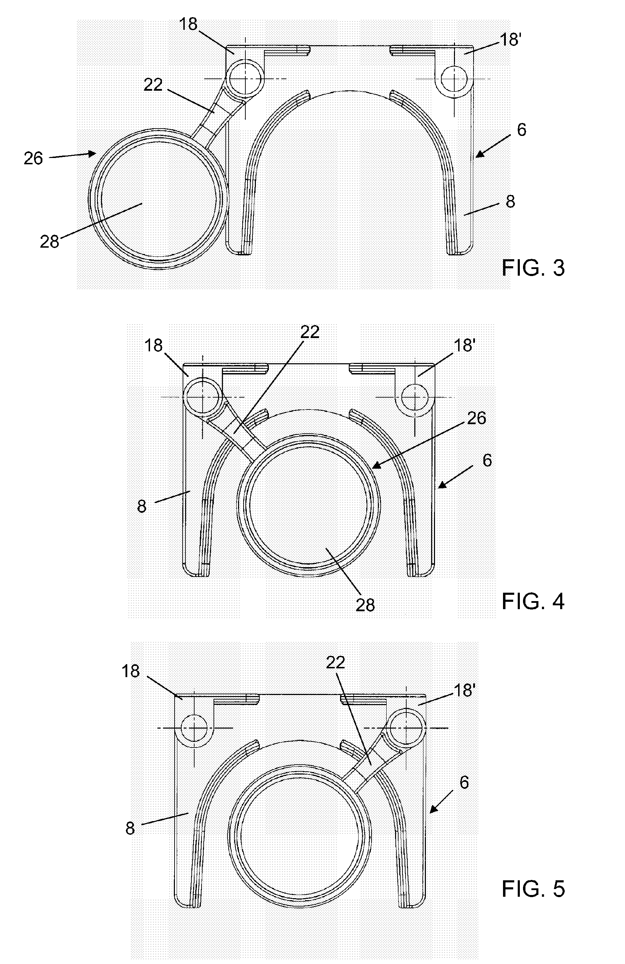

During delivery of the coffee powder, the filter holder is positioned between the arms 8 of the fork-shaped support 6 such that the filter cup 14 lies positioned below the lower end of the delivery chute 4 and is able to receive the measured quantity of coffee powder. During this stage the presser 26 is maintained in the aforedefined rest position shown in Figures 1 and 3. This position can be maintained by simple friction between the mutually movable parts or can be maintained elastically by the presence of a spring interposed between the two hinge elements 18 and 20 or ball stops.

On termination of delivery the operator moves the presser into its active position, i.e. into the other end position, at which the disc element 20 is positioned exactly above the filter cup 14. The operator then applies a downward force on the handgrip to cause the shaft 32 of the presser 26 to slide along the tubular support 24 and presses the coffee powder within the filter cup 14. On termination of this stage the presser 26 returns elastically into its upper end-of-travel position and from there can be returned to its lateral rest position either by the action of the operator or by elastic return.

Instead of being formed in one piece, the shaft 32 can be formed in two pieces, between which a sized spring is interposed to maintain them axially spaced apart and in this manner enable a specific pressure to be exerted on the coffee powder, possibly by a dynamometric system.

The aforedescribed parts arrangement is advantageous if the coffee machine is positioned to the right of the coffee grinder, with reference to the operator. If however it is positioned on the left, or if different operator requirements suggest it, the arm 22 can be connected to the hinge elements 18' instead of 18, as shown in Figure 5.

From the aforegoing it is apparent that coffee powder presser device of the invention is of considerable advantage, and in particular:
- it is of very simple construction and of simple, reliable and precise operation,
- it can be applied to practically any coffee grinder with a lower or front coffee powder exit,
- it presses the coffee powder without having to move the filter cup from that position in which it has received the powder,
- it is adaptable to different positions of the coffee machine relative to the coffee grinder.

## Claims

1. A presser device for coffee powders and the like to be applied to a coffee grinder with its dispenser (4) provided with a front exit for the coffee powder and also provided with a fork-shaped support for a filter holder (10) with filter cup (14), **characterised by** comprising:
- a member (6) for its connection to the coffee grinder,
- a presser (26) with an upper handgrip (28), with a lower disc portion (30) for pressing and with a vertical shaft (32) for connecting said handgrip (28) to said disc portion (30),
- a tubular element (24) for slidably supporting said presser along said shaft (32),
- elastic means associated with said tubular element to maintain said presser in its upper end-of-travel position when external forces are absent,
- at least one hinged arm (22) for connecting said connection member (6) to said tubular support element (24), said arm guiding the movement of said support between an active position in which the axis of said presser (26) substantially coincides with the axis of said filter cup positioned with the filter holder on said fork-shaped support, and a rest position in which said presser is external to the space overlying said filter cup, and
- means for halting the angular travel of said arm in said active and rest positions.

2. A presser device as claimed in claim 1, **characterised in that** the connection member consists of a substantially U-shaped plate (6) with its two arms disposed on one and the other side of the dispenser and provided with means for its fixing to said base.

3. A presser device as claimed in claim 1, **characterised in that** the plate is provided lowerly with a pair of forwardly facing arms (8) forming a support fork for the filter holder (10).

4. A presser device as claimed in claim 1, **characterised in that** the plate is provided along at least one of its vertical sides with a hinge element (18, 18') to which a corresponding hinge element (20) provided at the end of the tubular element (24) slidably supporting the presser can be applied.

5. A presser device as claimed in claim 1, **characterised in that** the means for halting angular travel consist of a spring interposed between the hinge elements.
